# EUROPÄISCHE PATENTSCHRIFT

(11) **EP 2 130 660 B1**
(45) Veröffentlichungstag und Bekanntmachung des Hinweises auf die Patenterteilung: **21.09.2011**
(21) Anmeldenummer: 09161328.1
(22) Anmeldetag: 28.05.2009
(51) Int. Cl.: B29C 41/18, B29C 33/34, B29C 41/46

(54) **Vorrichtung und Verfahren zur Herstellung von Slush-Häuten**
Device and method for producing slush skins
Dispositif et procédé de fabrication de peaux d'embouage

(30) Priorität: 02.06.2008 DE 102008026365
(43) Veröffentlichungstag der Anmeldung: 09.12.2009
(73) Patentinhaber: International Automotive Components Group GmbH, 47804 Krefeld (DE)
(72) Erfinder: Bergers, Helmut, 47929 Grafrath (DE); Berger, Benno, 85560 Ebersberg (DE); Zipper, Wolfgang, 83308 Trostberg (DE); Steger, Ulrich, 85586 Poing (DE); Braun, Wilhelm, 83556 Griesstätt (DE); Meindl, Wolfgang, 85570 Markt Schwaben (DE)
(74) Vertreter: Liesegang, Eva

(56) Entgegenhaltungen:
- WO-A-03/031139
- JP-A- 6 190 846
- US-A- 3 506 755
- US-A- 4 755 333

## Beschreibung

Die Erfindung betrifft ein Verfahren und eine Vorrichtung zur Herstellung einer Kunststoffhaut aus einem thermoplastischen Kunststoffpulver in einem erwärmten Formkörper.

Die Herstellung verhältnismäßig dünner Kunststoffhäute mit vorgegebener Form ist wichtig in der Automobilindustrie, wo solche Kunststoffhäute in der Fahrzeuginneneinrichtung, beispielsweise zur Abdeckung von Instrumententafeln, Türpanelen oder Konsolen, eine vielseitige Verwendung finden.

Seit den 60er Jahren werden solche geformten Kunststoffhäute, auch als Slush-Häute und englisch als "Cast Skins" bezeichnet, routinemäßig in großem Umfang durch Aufschmelzen eines fließfähigen Kunststoffpulversubstrats in einem erwärmten Formkörper hergestellt. Ein solcher Formkörper, dessen Oberflächenkontur der Form der herzustellenden Kunststoffhaut entspricht, wird dabei im Allgemeinen zunächst vorgeheizt und anschließend mit dem Pulversubstrat befüllt. Das Pulversubstrat schmilzt an der Oberfläche des erhitzten Formkörpers auf und wird unter weiterem Heizen des Formkörpers vollständig aufgeschmolzen. Bei einer sich anschließenden Kühlung geliert die Kunststoffhaut in der gewünschten Form und mit der gewünschten Oberflächenbeschaffenheit aus und kann in erkaltetem Zustand aus dem Formkörper entnommen werden. Die Erwärmung und Kühlung des Formkörpers erfolgte dabei ursprünglich von der Rückseite des Formkörpers mit Hilfe von Rohrleitungen, durch die heiße oder kalte Flüssigkeit strömt. Solche Vorrichtungen und Verfahren sind beispielsweise in den Patentschriften US 5,106,285, US 4,389,177 und US 4,217,325 beschrieben.

In einem alternativen Verfahren wird der Formkörper zur Erwärmung mit unter Verwendung von Gasbrennern erhitzter Luft und zur Kühlung mit Umgebungsluft umströmt. Solche Anlagen sind zum Beispiel in den Patentschriften US 4,623,503, US 6,019,390 sowie US 6,082,989 beschrieben. Als nachteilig hat sich bei Anlagen dieses Typs allerdings erwiesen, dass das Material des Formkörpers aufgrund der abwechselnden Beströmung mit heißer und kalter Luft unter jeweils recht hohem Druck einer starken Materialermüdung ausgesetzt ist. Aufgrund des umfangreichen Systems von Zu- und Ableitungen samt Gasbrennern und Frischluftzufuhr sind solche Anlagen zudem sehr groß und schwerfällig. Als Nachteil erweist sich außerdem die beträchtliche Wärme- und Lärmentwicklung, die häufig eine aufwändige Abschirmung der Vonichtung nötig macht, wodurch sich die Abmessungen der Anlage abermals erhöhen. Hinzu kommt der große Energiebedarf und die geringe Effizienz, die modernen Umweltschutzmaßstäben nicht gerecht werden. Zudem ist der Formkörper in den beschriebenen Verfahren oft fest mit den Zu- und Ableitungen des Wärme- bzw. Kühlkreislaufs verbunden und somit integraler Bestandteil der Anlage. Bei Modellwechseln, die mit zunehmender Häufigkeit auftreten, lässt sich der Formkörper daher nur schwer an jeweils neue Formen und Oberflächengestaltungen der Kunststoffhäute anpassen.

Vor diesem Hintergrund wurden in der Folgezeit Anlagen entwickelt, bei denen die Rückseite des Formkörpers mit Hilfe von Infrarot-Heizelementen erwärmt und an einer räumlich getrennten Station mit Hilfe einer Sprühnebelkühlung gekühlt wird. Indem die Infrarot-Heizelemente an die Kontur des zu erwärmenden Formkörpers angepasst werden und außerdem räumlich nicht direkt mit ihm verbunden sind, lässt sich sowohl eine verhältnismäßig energieeffiziente Erwärmung des Formkörpers als auch eine einfachere Anpassung des Formkörpers und der Heizeinrichtung an neue Formen erreichen. Die Sprühnebelkühlung gestattet zudem eine schnellere, gezieltere und effizientere Kühlung des Formkörpers, wodurch sich sowohl die Wirtschaftlichkeit als auch die Umweltverträglichkeit des Herstellungsverfahrens weiter erhöhen. Die Patentschriften WO 03/031139 A1, US 2004/0065981 A1 sowie WO 2005/016613 A2 beschreiben Anlagen und Verfahren dieses Typs, wobei der Formkörper an einer ersten Station zunächst von seiner Rückseite durch Infrarot-Heizelemente vorgeheizt und anschließend an einer zweiten Station mit dem Pulversubstrat befüllt wird. Nachdem das Substrat durch Schwenken oder Rotieren auf der Oberfläche des Formkörpers verteilt wurde, wird es unter weiterem Heizen an der ersten Station aufgeschmolzen. Der Wärmeeintrag erfolgt dabei erneut unter Verwendung der Infrarot-Heizelemente von der Rückseite des Formkörpers aus. Bei der anschließenden Sprühnebelkühlung an einer dritten Station härtet die Kunststoffhaut in der gewünschten Form aus und kann von Hand entnommen werden.

Die Infrarot-Heizelemente können zur gezielten Wärmezufuhr ansteuerbar sein. Die Außenseite des Formkörpers kann zusätzlich zur Steuerung der Strahlungsabsorption in unterschiedlichen Farbtönen und Schattierungen beschichtet sein.

Die zuletzt beschriebenen Vorrichtungen und Verfahren stellen gegenüber älteren Pulver-Slush-Anlagen sowohl hinsichtlich der Umweltverträglichkeit als auch der Verfahrenseffizienz einen beträchtlichen Fortschritt dar. Jedoch besteht weiterhin das Problem, dass zum Ausformen der Kunststoffhaut stets nicht nur das Pulversubstrat selbst, sondern der gesamte Formkörper aufgeheizt werden muss.

In den beschriebenen Verfahren schmilzt das Pulversubstrat am vorgewärmten Formkörper bereits beim Befüllen auf und haftet an der Oberfläche des Formkörpers an. Der weitere Heizprozess dient dann dazu, ein vollständiges Aufschmelzen und Ausformen des nicht direkt mit der Oberfläche des Formkörpers in Berührung stehenden Pulversubstrats zu ermöglichen, so dass die Kunststoffhaut beim anschließenden Kühlen vollständig und über ihren gesamten Querschnitt homogen ausgeliert. Da die Wärmezufuhr allerdings in den beschriebenen Verfahren und Vorrichtungen stets von der Rückseite des Formkörpers erfolgt, wird in diesem Schritt notwendigerweise die Rückseite der Kunststoffhaut durch Wärmeleitung von ihrer dem Formkörper zugewandten Vorderseite aus erwärmt. Der größere Teil der eingesetzten Wärmeenergie wird dabei zwangsläufig im Formkörper selbst sowie an der bereits ausgeformten Vorderseite der Kunststoffhaut eingebracht, nicht an ihrer Rückseite. Dadurch wird nicht nur die Verfahrenseffizienz herabgesetzt. Es ergibt sich auch das Problem, dass sich der relativ große Wärmeeintrag mindernd auf die Beschaffenheit der Vorderseite der auszuformenden Kunststoffhaut auswirkt. Insbesondere kann es gerade bei hellen Häuten zu unerwünschten Verfärbungen der Oberfläche kommen.

Zwar ist aus der Anmeldeschrift EP 1 655 121 A1 ein Verfahren und eine Vorrichtung zur Herstellung von Kunststoffhäuten bekannt, bei der ein Formkörper beidseitig durch Infrarot-Heizelemente erwärmt wird. Jedoch tritt bei der direkten Erwärmung des Pulversubstrats mittels Infrarot-Heizstrahlern das Problem auf, dass der Wärmeeintrag zu ungleichmäßig erfolgt und die Gefahr der örtlichen Verbrennung der Kunststoffhaut besteht. Beim Vorwärmen der Vorderseite des Formkörpers mittels Infrarot-Heizelementen ergibt sich darüber hinaus zusätzlich das Problem der Verunreinigung des Formkörpers, wenn aufgrund des großen Wärmeeintrags lokal Rückstände des Pulversubstrats in die Oberfläche der Vorderseite des Formkörpers eingebrannt werden.

Die US 3,506,755 A beschreibt eine Vorrichtung zur Herstellung von Kunststoffhäuten in Formen. Die Formen werden vorgeheizt und bei Erreichen der Zieltemperatur mit Kunststoffpulver gefüllt und verschlossen. Nachfolgend wird das Kunststoffpulver durch eine rotierende Bewegung der Form in dieser verteilt. Nach Öffnung der Form wird diese zusammen mit dem verteilten Kunststoffmaterial so lange aufgeheizt, bis sich das Kunststoffmaterial in eine zusammenhängende Kunststoffhaut umgewandelt hat. Danach folgt die Abkühlung der Form und die Entnahme der in der Form enthaltenen Kunststoffhaut.

Die US 4,755,333 A beschreibt eine Vorrichtung für die Formung von dünnwandigen Kunststoffgehäusen in geheizten Formen, welche radial an einem drehbaren Karussell angeordnet sind und bei dem jede der Formen mit Hilfe eines Granulatkarussells mit verschiedenen Thermoplastgranulaten beschickt werden kann. Das Formkarussell kann dabei die Formen je nach Prozessführung in die verschiedenen vorgesehenen Heiz- bzw. Kühleinrichtungen bewegen.

Die WO 03/031139 A beschreibt ein Verfahren für die Herstellung von Kunststoffartikeln durch Vorheizen einer metallischen Form mittels Infrarotstrahlung zur Erreichung einer Gusstemperatur und den nachfolgenden Guss von Kunststoffmaterial auf die vorgeheizte Oberfläche der Metallform. Nach dem mit Hilfe von Infrarotenergie vollständigen Aufschmelzen des Kunststoffs in eine im Wesentlichen gleichförmige Schicht und der nachfolgenden Kühlung der metallischen Form mittels Verdampfungskühlung kann schließlich der fertige gegossene Kunststoffartikel aus der Metallform entnommen werden.

Die DE 40 23 878 A1 beschreibt eine Vorrichtung und ein Verfahren zur Herstellung von Kunststoff-Formfolien mit einem Formwerkzeug, bei dem das Ausgelieren der Formfolie unter Verwendung einer Nachglätthaube als Warmluftheizung erfolgt. Die Warmluftheizung umfasst einen Wärmespeicher, von dem aus dem Formwerkzeug erwärmte Luft über Frischluft- und/oder Umluftkanäle und ein Gebläse zugeführt wird.

Die DE 199 28 861 A1 beschreibt ein Verfahren und eine Vorrichtung zum Herstellen dünnwandiger Kunststoffkörper in einem Formwerkzeug, welches durch über Düsen unter hohem Druck zugeführten Heißdampf erwärmt wird.

Aufgabe der vorliegenden Erfindung ist es deshalb, ein Verfahren und eine Vorrichtung zur Herstellung einer Kunststoffhaut in einem Formkörper anzugeben, das die oben genannten Nachteile vermeidet und bei hoher Energie- und Prozesseffizienz zu qualitativ höherwertigen Kunststoffhäuten führt.

Diese Aufgaben werden erfindungsgemäß durch Angabe eines Verfahrens und einer Vorrichtung mit den Merkmalen der Ansprüche 1 bzw. 8 gelöst.

Die erfindungsgemäße Lösung besteht darin, ein Verfahren und eine Vorrichtung anzugeben, bei denen der Formkörper an einer ersten Station mittels einer der ersten Seitenfläche des Formkörpers und damit seiner Rückseite zugewandten ersten Heizeinrichtung vorgeheizt wird. Anschließend wird an einer zweiten Station ein Kunststoff-Pulversubstrat auf einer der ersten Seitenfläche des vorgeheizten Formkörpers entgegengesetzten zweiten Seitenfläche, die Teil der Vorderseite des Formkörpers ist und die Kontur der herzustellenden Kunststoffhaut aufweist, verteilt und angeschmolzen. An einer dritten Station wird dann der mit dem Pulversubstrat beschichtete Formkörper unter Verwendung einer der zweiten Seitenfläche des Formkörpers und damit dem Pulversubstrat zugewandten zweiten Heizeinrichtung erwärmt, wobei diese Erwärmung mittels Konvektion erfolgt. Zuletzt wird der Formkörper mittels einer Kühleinrichtung an einer vierten Station gekühlt, so dass die ausgeformte Kunststoffhaut entnommen werden kann.

Indem das Heizen an der dritten Station von einer der Vorderseite des Formkörpers zugewandten separaten Heizeinrichtung mittels Konvektion erfolgt, kann ein energieeffizientes Aufschmelzen unter gleichmäßigem kontrolliertem Wärmeeintrag sichergestellt werden. Dadurch wird sowohl der Gefahr einer lokalen Überhitzung der Rückseite der Kunststoffhaut als auch der Gefahr einer lokalen Überhitzung der Vorderseite der Kunststoffhaut vorgebeugt. Im Ergebnis entstehen in einem energie- und ressourcenschonenden Verfahren bei kurzer Prozesszeit qualitativ sehr hochwertige Kunststoffhäute, selbst bei hellen Farben.

Ein gleichmäßiger und schonender Wärmeeintrag ist beispielsweise sichergestellt, wenn das Heizen des Formkörpers an der dritten Station mittels einer der zweiten Seitenfläche des Formkörpers benachbarten erwärmten Fläche erfolgt. Dabei kann es sich beispielsweise um die Oberfläche eines (gegebenenfalls beweglichen) Stempels handeln. Wird die Oberfläche des Stempels zusätzlich an die Kontur des Formkörpers angepasst, ergibt sich auf einfache Weise eine sehr wirkungsvolle Möglichkeit der gezielten Wärmezufuhr, die zu sehr gleichmäßig ausgeformten Kunststoffhäuten führt und den Wärmeverlust zusätzlich minimiert.

Der Stempel kann dabei beispielsweise einfach und effizient mittels eingelassener Heizdrähte oder Heizschleifen erwärmt werden. Alternativ kann der Stempel auch erwärmt werden, indem seine der zweiten Seitenfläche des Formkörpers abgewandte Seitenfläche mittels Wärmestrahlung erwärmt wird. Dabei können Infrarot-Heizelemente eingesetzt werden, die in ihrer Ausgestaltung und/oder räumlichen Anordnung abhängig von der Kontur des Stempels bzw. des Formkörpers ausgelegt werden können. Mehr noch als bei der Heizung mittels eingelassener Heizdrähte ergibt sich dadurch die Möglichkeit, der Rückseite der Kunststoffhaut Wärmeenergie punktgenau und zeitgenau zuzuführen und damit den Heizprozess optimal zu steuern. Insbesondere können dazu die Infrarot-Heizelemente einzeln oder zu geeigneten Gruppen zusammengefasst gesteuert oder geregelt werden.

Das Vorheizen des Formkörpers mittels einer der ersten Seitenfläche und damit der Rückseite des Formkörpers zugewandten Heizeinrichtung kann mittels Wärmestrahlung erfolgen. Dabei können wiederum Infrarot-Heizelemente zum Einsatz kommen, wobei deren Ausgestaltung und/oder ihre räumliche Anordnung abermals in Abhängigkeit von der Kontur des Formkörpers ausgelegt sein kann. Auch diese Infrarot-Heizelemente können einzeln oder in Gruppen gesteuert oder geregelt werden, um den Wärmeeintrag zu optimieren. Die Vorteile der Verwendung von Wärmestrahlung im Allgemeinen und Infrarot-Heizelementen im Besonderen liegen vor allem darin, dass Wärmeenergie innerhalb kürzester Zeit und lokal begrenzt sowohl zur Verfügung gestellt und auch abgestellt werden kann. Erneut werden dadurch sowohl die Prozesseffizienz als auch die Energieeffizienz erhöht.

Zudem lässt sich bei Verwendung zweier getrennter Heizeinrichtungen samt Infrarot-Heizelementen sicherstellen, dass die Anordnung und Ausrichtung der Heizstrahler sowie ihre Steuerung mit verhältnismäßig geringem Aufwand an neue Formkörper angepasst werden können.

Die beschriebenen Verfahrensschritte des Vorheizens des Formkörpers, des Verteilens eines Pulversubstrats, des Heizens des mit dem Pulversubstrat beschichteten Formkörpers sowie des abschließenden Kühlens können an jeweils räumlich getrennten Stationen stattfinden; es können jedoch auch einzelne Stationen räumlich zusanunenfallen. Insbesondere kann es sehr vorteilhaft sein, wenn das Heizen des mit dem Pulversubstrat beschichteten Formkörpers an derselben Station stattfindet wie das Vorheizen des Formkörpers. Soweit nötig, kann dann zum Vorheizen des Formkörpers neben der ersten Heizeinrichtung unterstützend auch die zweite Heizeinrichtung eingesetzt werden. Ebenso kann zum Heizen neben der zweiten Heizeinrichtung bei Bedarf auch die erste Heizeinrichtung zum Einsatz kommen. Schließlich kann in einer solchen Anordnung auch in Abwesenheit des Formkörpers die erste Heizeinrichtung eingesetzt werden, um ein Heizelement der zweiten Heizeinrichtung zumindest teilweise zu erwärmen, oder umgekehrt. Durch solche Synergieeffekte ergeben sich zusätzliche Vorteile der erfindungsgemäßen Vorrichtung und des erfindungsgemäßen Verfahrens, die die Prozesseffizienz weiter steigern.

Die Kühlung des Formkörpers an der vierten Station kann beispielsweise durch Verdampfungskühlung oder Sublimationskühlung erfolgen. Insbesondere kann die erste Seitenfläche des Formkörpers in einer Sprühnebelkühlung mit einem Wasser-Luft-Gemisch besprüht werden. Auch die Sprühdüsen und ihre räumliche Anordnung können abhängig von der Kontur des Formkörpers ausgelegt werden, um den Kühlprozess zu vergleichmäßigen und zu beschleunigen und gleichzeitig die verwendeten Ressourcen sparsam einzusetzen.

Das erfindungsgemäße Verfahren zur Herstellung einer Kunststoffhaut in einem Formkörper umfasst das Vorheizen des Formkörpers mittels einer einer ersten Seitenfläche des Formkörpers zugewandten ersten Heizeinrichtung an einer ersten Station, das Verteilen eines Pulversubstrats auf einer der ersten Seitenfläche des vorgeheizten Formkörpers entgegengesetzten zweiten Seitenfläche des Formkörpers an einer zweiten Station, das Heizen des mit dem Pulversubstrats beschichtete Formkörpers mittels Konvektion unter Verwendung einer der zweiten Seitenfläche des Formkörpers zugewandten zweiten Heizeinrichtung an einer dritten Station sowie das Kühlen des Formkörpers an einer vierten Station.

Gemäß einer bevorzugten Ausführungsform erfolgt das Vorheizen des Formkörpers an der ersten Station mittels Wärmestrahlung.

Gemäß einer Weiterbildung der vorstehend genannten Ausführungsform erfolgt das Vorheizen des Formkörpers mittels Infrarot-Heizelementen.

Die Infrarot-Heizelemente und/oder ihre räumliche Anordnung können insbesondere abhängig von der Kontur der ersten Seitenfläche und/oder zweiten Seitenfläche des Formkörpers ausgelegt werden.

Gemäß einer Weiterbildung der vorstehend genannten Ausführungsformen können die Infrarot-Heizelemente einzeln oder in Gruppen gesteuert oder geregelt werden.

In einer bevorzugten Ausführungsform der Erfindung erfolgt das Heizen des Formkörpers mittels einer der zweiten Seitenfläche des Formkörpers benachbarten erwärmten Fläche.

In einer Weiterbildung der Erfindung erfolgt das Heizen des Formkörpers mittels eines erwärmten Stempels.

Die Kontur des Stempels kann dabei abhängig von der Kontur des Formkörpers ausgelegt werden.

In einer Weiterbildung der Erfindung nach den vorstehend genannten Ausführungsformen wird der Stempel elektrisch mittels eingelassener Heizdrähte oder Heizschleifen erwärmt.

In einer alternativen Ausführungsform des erfindungsgemäßen Verfahrens wird der Stempel erwärmt, indem seine der zweiten Seitenfläche des Formkörpers abgewandte Seitenfläche zumindest teilweise mittels Wärmestrahlung, insbesondere durch Infrarot-Heizelemente, erwärmt wird.

Gemäß einer Weiterbildung der vorstehend genannten Ausführungsform werden die Infrarot-Heizelemente und/oder ihre Anordnung abhängig von der Kontur des Stempels und/oder Formkörpers ausgelegt.

Nach einer Weiterbildung der Erfindung werden die Infrarot-Heizelemente einzeln oder in Gruppen gesteuert oder geregelt.

Gemäß einer Ausführungsform des erfindungsgemäßen Verfahrens sind die erste, zweite, dritte und vierte Station jeweils räumlich getrennt.

Nach einer alternativen, bevorzugten Ausführungsform fällt die dritte Station mit der ersten Station zusammen.

In einer Weiterbildung der vorgenannten Ausführungsform kann insbesondere die erste Heizeinrichtung ortsfest sein und die zweite Heizeinrichtung bewegt werden.

Nach einer Weiterbildung der vorstehend genannten Ausführungsform kann das Heizen des Formkörpers zusätzlich durch die erste Heizeinrichtung erfolgen.

Ebenso kann gemäß einer bevorzugten Ausführungsform das Vorheizen des Formkörpers zusätzlich mittels der zweiten Heizeinrichtung erfolgen.

Nach einer Weiterbildung der Erfindung wird ein Heizelement der zweiten Heizeinrichtung zumindest teilweise erwärmt, indem es in räumliche Nähe zur ersten Heizeinrichtung gebracht wird.

Gemäß einer bevorzugten Ausführungsform kann das Kühlen des Formkörpers durch Verdampfungskühlung oder Sublimationskühlung erfolgen.

Gemäß einer Weiterbildung der Erfindung kann das Kühlen des Formkörpers insbesondere durch Sprühnebelkühlung erfolgen.

Zur Kühlung des Formkörpers kann die erste Seitenfläche des Formkörpers mit einem Wasser-Luft-Gemisch besprüht werden.

Nach einer Weiterbildung der vorgenannten Ausführungsformen wird die erste Seitenfläche des Formkörpers aus Düsen besprüht und werden die Düsen und/oder ihre räumliche Anordnung abhängig von der Kontur des Formkörpers ausgelegt.

Die Erfindung bezieht sich ebenso auf eine Vorrichtung zur Herstellung einer Kunststoffhaut mit einem Formkörper, der eine erste Seitenfläche und eine der ersten Seitenfläche entgegengesetzte zweite Seitenfläche umfasst, wobei zumindest die zweite Seitenfläche an die Kontur und/oder Oberflächenstruktur der herzustellenden Kunststoffhaut angepasst ist. Ferner umfasst die Vorrichtung eine erste Heizeinrichtung zum Vorheizen des Formkörpers, die an einer ersten Station der ersten Seitenfläche des Formkörpers gegenüberliegt, und eine Beschichtungseinrichtung zum Auftragen und Verteilen eines Pulversubstrats auf der zweiten Seitenfläche des Formkörpers an einer zweiten Station. Die erfindungsgemäße Vorrichtung umfasst auch eine zweite Heizeinrichtung zum Heizen des Formkörpers mittels Konvektion, wobei die zweite Heizeinrichtung an einer dritten Station der zweiten Seitenfläche des Formkörpers gegenüberliegt. Schließlich umfasst die erfindungsgemäße Vorrichtung eine Kühleinrichtung zum Kühlen des Formkörpers an einer vierten Station.

Gemäß einer bevorzugten Ausführungsform weist die erste Heizeinrichtung Infrarot-Heizelemente auf.

Nach einer Weiterbildung der vorstehend genannten Ausführungsform sind die Infrarot-Heizelemente und/oder ihre Anordnung innerhalb der ersten Heizeinrichtung abhängig von der Kontur des Formkörpers ausgelegt.

Insbesondere können die Infrarot-Heizelemente der vorstehend genannten Ausführungsformen einzeln oder in Gruppen ansteuerbar oder regelbar sein.

Gemäß einer bevorzugten Ausführungsform der Erfindung umfasst die zweite Heizeinrichtung eine erwärmbare Fläche, die der zweiten Seitenfläche des Formkörpers benachbart ist oder in unmittelbare Nachbarschaft zur zweiten Seitenfläche des Formkörpers verfahrbar ist.

Nach einer Weiterbildung der Erfindung ist die erwärmbare Fläche eine der zweiten Seitenfläche des Formkörpers gegenüberliegende Oberfläche eines Stempels.

In einer Weiterbildung der Erfindung kann der Stempel beweglich sein.

Gemäß einer bevorzugten Ausführungsform der Erfindung ist die Oberfläche des Stempels an die Kontur des Formkörpers angepasst.

Nach einer Weiterbildung der Erfindung umfasst der Stempel eingelassene Heizdrähte oder Heizschleifen.

Der Stempel kann insbesondere ein Aluminium-Guß-Stempel oder ein Blech-Stempel sein.

Nach einer weiteren Ausführungsform der erfindungsgemäßen Vorrichtung umfasst die zweite Heizeinrichtung Infrarot-Heizelemente, die eine der zweiten Seitenfläche des Formkörpers abgewandten Seitenfläche des Stempels gegenüberliegen.

Die Infrarot-Heizelemente und/oder ihre Anordnung innerhalb der zweiten Heizeinrichtung können abhängig von der Kontur des Formkörpers ausgelegt sein.

In einer Weiterbildung der Erfindung sind die Infrarot-Heizelemente einzeln oder in Gruppen ansteuerbar oder regelbar.

Nach einer Weiterbildung der Erfindung umfasst der Stempel eine Stempelschale, insbesondere eine Aluminium- oder Kupferschale, deren erste Seitenfläche die Oberfläche des Stempels bildet und deren der ersten Seitenfläche entgegengesetzte zweite Seitenfläche den Infrarot-Heizelementen zugewandt ist.

Gemäß einer bevorzugten Ausführungsform der Erfindung umfasst die Kühleinrichtung Sprühnebeldüsen, welche der ersten Seitenfläche des Formkörpers gegenüberliegen.

In einer Weiterbildung umfasst die Kühleinrichtung Wasserdüsen und Luftdüsen, die der ersten Seitenfläche des Formkörpers gegenüberliegen.

Die Düsen und/oder ihre räumliche Anordnung können abhängig von der Kontur des Formkörpers ausgelegt sein.

Gemäß einer Ausführungsform der Erfindung können die erste, zweite, dritte und vierte Station jeweils räumlich getrennt sein. In einer alternativen, bevorzugten Ausführungsform können die erste und die dritte Station auch räumlich zusammenfallen.

Das erfindungsgemäße Verfahren zur Herstellung einer Kunststoffhaut in einem Formkörper und die zugehörigen erfindungsgemäßen Vorrichtungen lassen sich am besten anhand der Beschreibung der nachfolgenden Zeichnungen verstehen. Es zeigen in schematischer Darstellung:
- Fig. 1: den Querschnitt eines Formkörpers gemäß einer Ausführungsform der vorliegenden Erfindung;
- Fig. 2: ein Flussdiagramm mit den erfindungsgemäßen Verfahrensschritten;
- Fig. 3: den Querschnitt einer Ausführungsform einer erfindungsgemäßen Vorrichtung zur Herstellung einer Kunststoffhaut; und
- Fig. 4: einen Formkörper mit beidseitig benachbarten Heizeinrichtungen gemäß einer Ausfüh- rungsform der vorliegenden Erfindung.

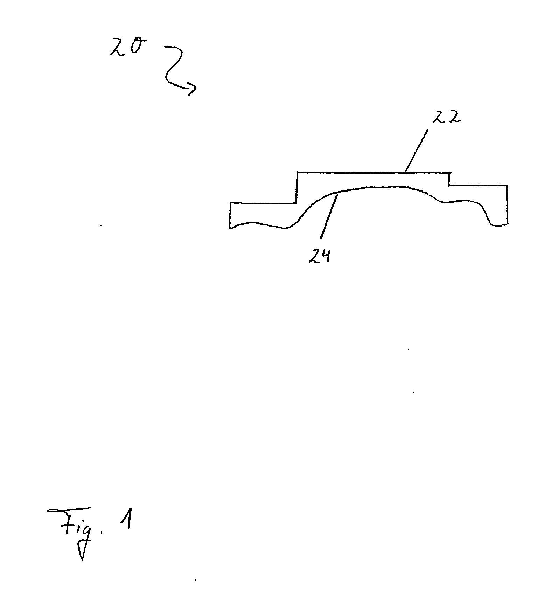

Fig. 1 zeigt schematisch im Querschnitt einen Formkörper 20, wie er zur Herstellung von Kunststoffhäuten im Pulver-Slush-Verfahren Verwendung finden kann. Ein solcher Formkörper 20 kann beispielsweise aus Nickel bestehen und eine erste Seitenfläche 22, die Teil der Rückseite des Formkörpers 20 ist, sowie eine ihr entgegengesetzte zweite Seitenfläche 24, die Teil der Vorderseite des Formkörpers ist, aufweisen. Die zweite Seitenfläche 24 entspricht in ihrer Größe und Form genau der herzustellenden Kunststoffhaut. Sie dient als formgebendes Element; an ihr bildet sich im Verlauf des nachstehend detailliert beschriebenen Verfahrens eine Kunststoffhaut mit der gewünschten Form und Oberflächenbeschaffenheit aus.

Der in Fig. 1 gezeigte Formkörper 20 weist beispielhaft eine Vorderseite mit einer verhältnismäßig einfach gestalteten zweiten Seitenfläche 24 auf Die zweite Seitenfläche 24 kann jedoch im Allgemeinen in Abhängigkeit von der herzustellenden Kunststoffhaut sehr viel komplizierter ausgestaltet sein und insbesondere Zerklüftungen und Hinterschnitte umfassen. Die Formgebung der ersten Seitenfläche 22 auf der Rückseite des Formkörpers 20 kann sich an der Formgebung der zweiten Seitenfläche 24 des Formkörpers 20 orientieren, insbesondere die Form der zweiten Seitenfläche 24 in ihren Details oder vereinfacht nachzeichnen. Allerdings kann die erste Seitenfläche 22 des Formkörpers 20 auch völlig unabhängig von der Form der zweiten Seitenfläche 24 des Formkörpers 20 gestaltet sein und beispielsweise eine ebene Oberfläche ohne jegliche Krümmungen oder Zerklüftungen aufweisen. Bei dem in Fig. 1 gezeigten Ausführungsbeispiel zeichnet die erste Seitenfläche 22 des Formkörpers die ihr entgegengesetzte zweite Seitenfläche 24 des Formkörpers 20 vereinfacht, aber nicht in allen ihren Einzelheiten, nach. Auf diese Weise lässt sich verhältnismäßig einfach ein Formkörper annähernd gleichmäßiger Dicke erzeugen.

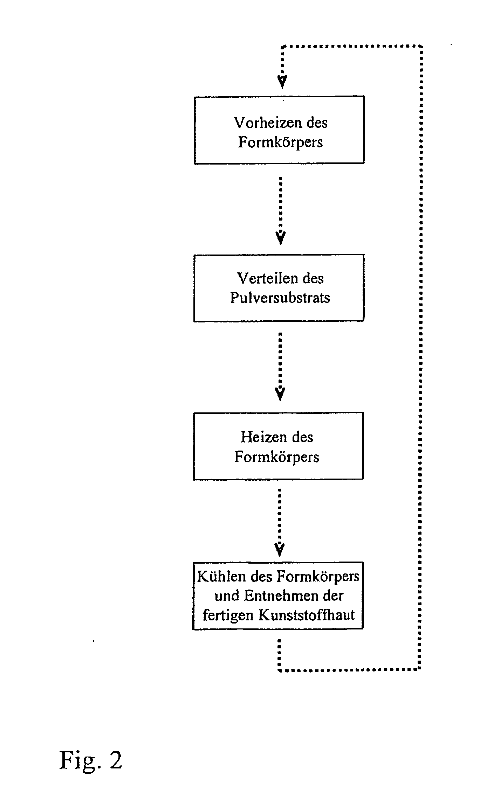

Fig. 2 veranschaulicht den zeitlichen Ablauf der erfindungsgemäßen Verfahrensschritte zur Herstellung einer Kunststoffhaut in einem Formkörper 20 anhand eines Flussdiagramms. Der Formkörper 20 wird in einem ersten Verfahrensschritt mittels einer der ersten Seitenfläche 22 des Formkörpers 20 zugewandten ersten Heizeinrichtung 26 erwärmt. Anschließend wird auf der zweiten Seitenfläche 24 des Formkörpers 20 ein Kunststoff-Pulversubstrat 28 aufgetragen und verteilt. Das Pulversubstrat 28 schmilzt an der erwärmten zweiten Seitenfläche 24 des Formkörpers 20 auf und haftet an der zweiten Seitenfläche 24 an. Nachfolgend wird der mit dem Pulversubstrat 28 beschichtete Formkörper 20 unter Verwendung einer der zweiten Seitenfläche 24 zugewandten zweiten Heizeinrichtung 30 weiter erwärmt. Dabei schmilzt das an der zweiten Seitenfläche 24 haftende Pulversubstrat vollständig auf. In einem letzten Verfahrensschritt wird der Formkörper 20 mittels einer Kühleinrichtung 32 gekühlt, und die fertig ausgeformte Kunststoffhaut wird entnommen. Das Verfahren kann dann mit dem erneuten Vorheizen des Formkörpers 20 zur Herstellung einer weiteren Kunststoffhaut fortgesetzt werden.

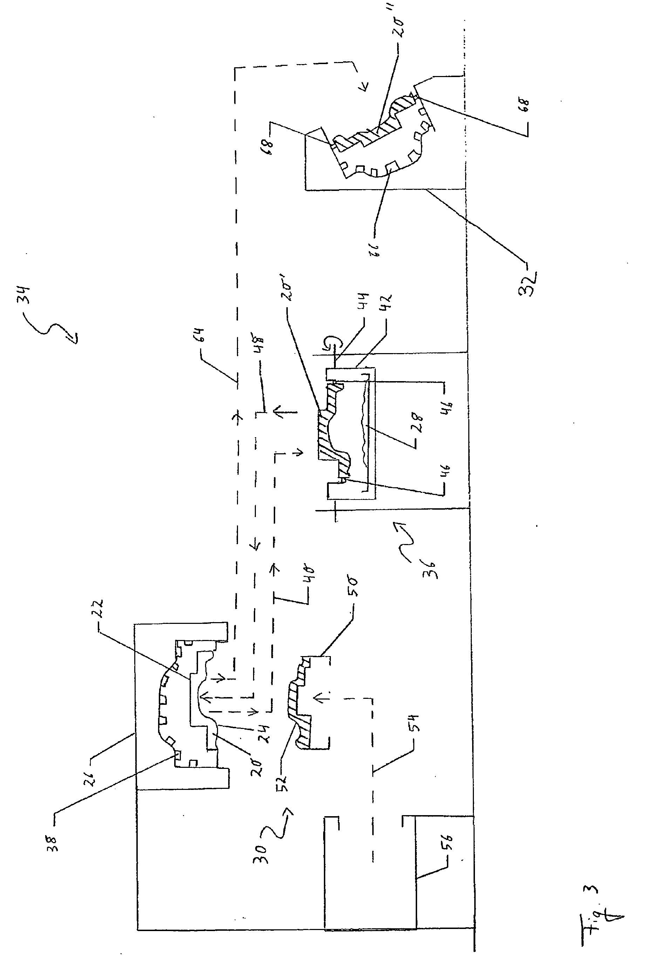

Die in Fig. 2 gezeigten Verfahrensschritte können an jeweils räumlich getrennten Stationen stattfinden, wobei der Formkörper 20 beweglich ist und sukzessive die genannten Stationen durchläuft. Es können aber auch, abhängig vom verfügbaren Bauraum und den jeweiligen Verfahrenserfordernissen, zwei oder mehr Stationen räumlich zusammenfallen. Wie bereits einleitend geschildert, ergeben sich vorteilhafte Synergieeffekte insbesondere dann, wenn die erste Station mit der dritten Station räumlich zusammenfällt, also das Vorheizen des Formkörpers 20 vor dem Verteilen des Pulversubstrats und das Heizen des Formkörpers 20 nach dem Verteilen des Pulversubstrats räumlich eng benachbart erfolgen. Eine entsprechende erfindungsgemäße Vorrichtung 34 zur Herstellung einer Kunststoffhaut in einem Formkörper 20 wird im Folgenden mit Bezug auf Fig. 3 ausführlich beschrieben.

Fig. 3 zeigt in schematischer Darstellung die wesentlichen Bestandteile einer erfindungsgemäßen Vorrichtung zur Herstellung einer Kunststoffhaut einschließlich der ersten Heizeinrichtung 26 zum Vorheizen des Formkörpers 20, einer Beschichtungseinrichtung 36 zum Auftragen und Verteilen des Pulversubstrats 28, der zweiten Heizeinrichtung 30 zum Heizen des mit dem Pulversubstrat beschichteten Formkörpers 20 sowie der Kühleinrichtung 32 zum Kühlen des Formkörpers 20. Wie geschildert, weist die gezeigte Ausführungsform nur drei räumlich getrennte Stationen auf, weil die dritte Station (Heizen) mit der ersten Station (Vorheizen) räumlich zusammenfällt. Der Formkörper ist in der beschriebenen Ausführungsform beweglich und wird von Station zu Station bewegt. In Fig. 3 ist er allerdings zur besseren Veranschaulichung der Verfahrensschritte an allen drei Stationen gezeigt; an der ersten Heizeinrichtung 26 bzw. zweiten Heizeinrichtung 30 ist er mit dem Bezugszeichen 20 versehen, an der Beschichtungseinrichtung 36 mit dem Bezugszeichen 20' und an der Kühleinrichtung 32 mit dem Bezugszeichen 20". Zur besseren Veranschaulichung des erfindungsgemäßen Verfahrens sind in Fig. 3 darüber hinaus die Verfahrwege des Formkörpers 20 zwischen den einzelnen Stationen gestrichelt eingezeichnet. Die erfindungsgemäße Vorrichtung kann im Allgemeinen eine Transporteinrichtung umfassen, die den Formkörper 20 selbsttätig und abgestimmt auf die Taktzeiten des Verfahrens von Station zu Station bewegt. Eine sorgfältig ausgelegte und präzise gesteuerte Transporteinrichtung kann für die Steigerung der Prozesseffizienz eine große Rolle spielen. Sie ist jedoch nicht Gegenstand dieser Anmeldung und daher aus Gründen der besseren Übersichtlichkeit in Fig. 3 nicht gezeigt. Auch etwaige weitere unterstützende Komponenten, beispielsweise Steuerungseinrichtungen für die erste und zweite Heizeinrichtung (26, 30), für die Beschichtungseinrichtung sowie für die Kühleinrichtung (32), sind in Fig. 3 aus Gründen der Übersichtlichkeit nicht dargestellt.

Wie in Fig. 3 gezeigt, wird der bewegliche Formkörper 20 in der beschriebenen Ausführungsform zunächst an der ersten Heizeinrichtung 26 mittels Wärmestrahlung vorgewärmt. Die erste Heizeinrichtung 26 umfasst zu diesem Zweck mehrere Infrarot-Heizelemente 38, die der ersten Seitenfläche 22 des Formkörpers 20 gegenüberliegend angeordnet sind. Aus Gründen der Übersichtlichkeit ist nur ein Infrarot-Heizelement bezeichnet. Bei den Infrarot-Heizelementen 38 kann es sich um konventionelle elektrische Infrarot-Strahler mit einer Wendeltemperatur von ca. 2000°C handeln. Wie in Fig. 3 gezeigt, kann sich die räumliche Anordnung der Infrarot-Heizelemente 38 innerhalb der ersten Heizeinrichtung 26 sowie ihre Ausrichtung zur gezielten Steuerung der Wärmezufuhr an die Kontur des Formkörpers 20 anpassen. In der gezeigten Ausführung zeichnet beispielsweise die Anordnung der Infrarot-Heizelemente 38 die Kontur der ersten Seitenfläche 22 des Formkörpers 20 teilweise nach. Damit wird ein effizienter, an die Gestalt des Formkörpers 20 angepasster Wärmeeintrag gewährleistet. Um die Wärmezufuhr während des Vorheizens zusätzlich zu optimieren, können die Infrarot-Heizelemente 38 darüber hinaus einzeln oder in Gruppen angesteuert oder geregelt werden. Eine beispielhafte Ausführung einer erfindungsgemäßen ersten Heizeinrichtung 26 kann beispielsweise 200 bis 250 Infrarot-Heizstrahler umfassen, die sich auf ca. 140 einzeln regelbare Heizzonen verteilen. Mit einer solchen ersten Heizeinrichtung 26 kann der Formkörper innerhalb von ca. 60 Sekunden auf die nötige Temperatur von 250°C vorgeheizt werden; mit einer konventionellen Heißluft-Heizeinrichtung beträgt die Vorwärmzeit dagegen bis zu 180 Sekunden.

Zur Steuerung der Strahlungsabsorption kann die erste Seitenfläche 22 des Formkörpers darüber hinaus farblich beschichtet sein. Dabei kann es sich sowohl um eine gleichmäßig schwarze Einfärbung als auch um eine lokal variable Einfärbung in unterschiedlichen Schwarz- und Grautönen handeln. Je größer der erwünschte Wärmeeintrag in einem ausgewählten Bereich des Formkörpers ist, desto dunkler wird die erste Seitenfläche 22 des Formkörpers in diesem Bereich eingefärbt.

Indem die Infrarot-Heizelemente 38 einzeln regelbar und ausrichtbar sind, lässt sich die erste Heizeinrichtung 26 verhältnismäßig einfach an neue Formkörper 20 anpassen. Bei eventuellen Modelwechseln genügt es daher, den Formkörper 20 auszutauschen und die Infrarot-Heizelemente 38 neu zu justieren.

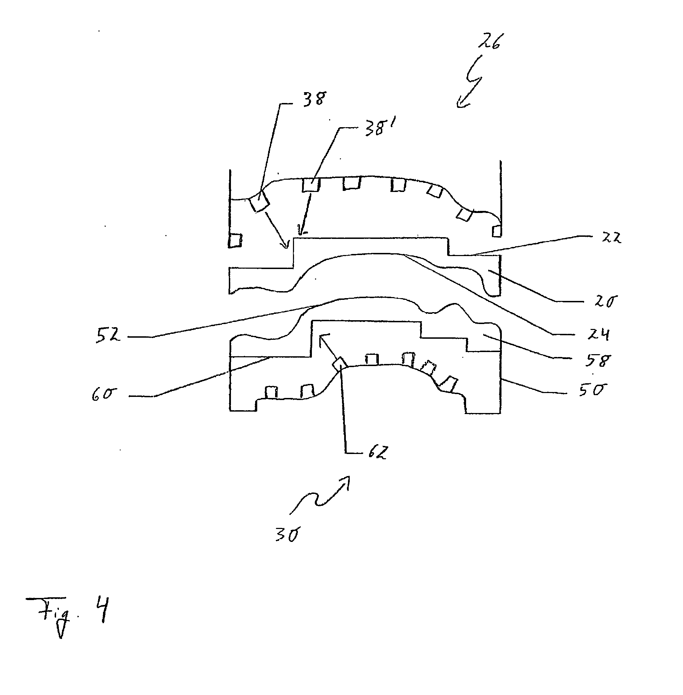

Das erfindungsgemäße Verfahren zum Vorheizen bzw. Heizen des Formkörpers 20 wird einschließlich einiger vorteilhafter Ausführungsformen und der zugehörigen erfindungsgemäßen Vorrichtungen unten mit Bezug auf Fig. 4 genauer erläutert.

Nach erfolgtem Vorheizen wird der Formkörper 20 entlang des Verfahrweges 40 von der ersten Heizeinrichtung zur Beschichtungseinrichtung 36 bewegt. Wie in Fig. 3 gezeigt, kann die Beschichtungseinrichtung 36 eine Beschichtungstrommel 42 umfassen, die das Pulversubstrat 28 aufnimmt, um mindestens eine Drehachse 44 drehbar gelagert ist und eine Öffnung zur Aufnahme des Formkörpers 20 vorsieht. Der vorgewärmte Formkörper 20 bzw. 20' wird so in die Öffnung der Beschichtungstrommel 42 eingeführt, dass seine zweite Seitenfläche 24 dem Inneren der Beschichtungstrommel 42 und damit dem Pulversubstrat 28 zugewandt ist und er die Öffnung der Beschichtungstrommel 42 dicht abschließt. Dazu können insbesondere am Rande der Öffnung der Beschichtungstrommel Dichtwigselemente 46 vorgesehen sein. Nachdem der vorgewärmte Formkörper 20 mittels einer nicht gezeigten Arretiervorrichtung fest mit der Beschichtungstrommel 42 verbunden worden ist, führt die Einheit aus Formkörper 20 und Beschichtungstrommel 42 eine oder mehrere vollständige Drehbewegungen um die Drehachse 44 aus. Dabei kommt das Pulversubstrat 28 mit der vorgewärmten zweiten Seitenfläche 24 des Formkörpers in Kontakt, haftet an ihr an und schmilzt teilweise auf. Nach Abschluss der Drehbewegung, wenn Beschichtungstrommel 42 und Formkörper 20 wieder in ihre Ausgangslage zurückgekehrt sind, fällt überschüssiges Pulversubstrat von der zweiten Seitenfläche 24 zurück in die Beschichtungstrommel 42.

Neben der hier beschriebenen Drehung um eine Drehachse 44 können, sofern es sich angesichts der Form und Kontur des Formkörpers 20 für das Verfahren als förderlich erweist, zusätzlich Drehungen um weitere Drehachsen vorgenommen werden. Zudem kann die Einheit aus Beschichtungstrommel 42 und Formkörper 20 während des Beschichtungsvorgangs auch lateral bewegt oder gerüttelt werden.

Nach Abschluss des Beschichtungsvorgangs wird die Verbindung des Formkörpers 20 zur Beschichtungstrommel 42 gelöst, und der Formkörper 20 wird mitsamt dem an seiner zweiten Seitenfläche 24 anhaftenden und teilweise aufgeschmolzenen Pulversubstrat entlang des Verfahrwegs 48 zum weiteren Heizen an die dritte Station transportiert, die in der in Fig. 3 gezeigten Ausführungsform räumlich mit der ersten Station zum Vorheizen zusammenfällt.

Im nachfolgenden Schritt wird der mit dem Pulversubstrat beschichtete Formkörper mittels Konvektion unter Verwendung einer der zweiten Seitenfläche 24 zugewandten zweiten Heizeinrichtung 30 weiter erwärmt, so dass das an der zweiten Seitenfläche 24 des Formkörpers 20 anhaftende Pulversubstrat vollständig aufschmelzen kann. Dadurch wird ein gleichmäßiges Gelieren der Kunststoffhaut im nachfolgenden Verfahrensschritt sichergestellt.

Die Erwärmung des Formkörpers 20 kann mittels einer der zweiten Seitenfläche 24 des Formkörpers 20 benachbarten erwärmten Fläche erfolgen. Wie in Fig. 3 gezeigt, kann es sich bei der erwärmten Fläche insbesondere um die Oberfläche 52 eines verfahrbaren Stempels 50 handeln, der entlang eines Verfahrwegs 54 aus einer Garage 56 von unten an den Formkörper herangefahren werden kann. Indem der Stempel 50 verfahrbar eingerichtet ist, wird sichergestellt, dass er zum Heizen nahe an den Formkörper 20 heranbewegt werden kann, er andererseits aber die Bewegung des Formkörpers 20 vor und nach dem Heizen entlang der Verfahrwege 40, 48 bzw. 64 nicht stört. Bei dem Stempel 50 kann es sich beispielsweise um einen Aluminium-Guss-Stempel handeln, in den zur Erwärmung der Oberfläche 52 elektrisch betriebene Heizstäbe oder Heizschleifen eingelassen sind. Wird die auf diese Weise erwärmte Oberfläche 52 des Stempels 50 in räumliche Nähe zur zweiten Seitenfläche 24 des Formkörpers 20 gebracht, wird das an der zweiten Seitenfläche 24 anhaftende Pulversubstrat durch Konvektion erwärmt. Die Oberfläche 52 des Stempels 50 kann zur Vergleichmäßigung des Heizprozesses an die Kontur der zweiten Seitenfläche 24 des Formkörpers angepasst sein, beispielsweise diese Seitenfläche nachzeichnen, wie es Fig. 3 beispielhaft zeigt.

Wie eingangs erläutert, ergibt sich auf diese Weise eine besonders gleichmäßige und schonende Erwärmung der sich ausbildenden Kunststoffhaut, bei der im Gegensatz zur direkten Bestrahlung der zweiten Seitenfläche 24 mittels Infrarot-Heizelementen Verbrennungen ausgeschlossen sind. Zudem wird beim Heizen in der gezeigten Anordnung unter Verwendung eines der zweiten Seitenfläche 24 des Formkörpers gegenüberliegenden Heizstempels 50 die Wärmeenergie direkt der Rückseite der sich ausbildenden Kunststoffhaut zugeführt und damit dort eingebracht, wo der größte Wärmebedarf besteht. Ein übermäßiges und unnötiges Erwärmen des Formkörpers 20 und der an der zweiten Seitenfläche 24 anhaftenden Vorderseite der sich ausbildenden Kunststoffhaut, wie sie bei einer ausschließlichen Heizung mittels der ersten Heizeinrichtung 26 notwendigerweise erfolgen würde, ist damit entbehrlich. Mit Hilfe der erfindungsgemäßen Heizeinrichtung lässt sich auf diese Weise nicht nur der notwendige Energieeintrag und die Dauer des Heizvorgangs reduzieren. Gleichzeitig wird einer übermäßigen Erwärmung der Vorderseite der Kunststoffhaut, die insbesondere bei hellfarbigen Häuten zu unerwünschten Verfärbungen führen kann, vorgebeugt und damit die Qualität der so erzeugten Kunststoffhäute nachhaltig gesteigert.

Wird die Oberfläche 52 des Stempels 50 auf ca. 250°C erwärmt, lässt sich die Dauer des Heizvorgangs unter Verwendung der erfindungsgemäßen Vorrichtung auf ca. 60 bis 80 Sekunden reduzieren.

Eine alternative erfindungsgemäße Vorrichtung zum Heizen des Formkörpers wird im Folgenden mit Bezug auf Fig. 4 beschrieben. Fig. 4 zeigt den Formkörper 20, wie in Fig. 3, zwischen der ersten Heizeinrichtung 26 und der zweiten Heizeinrichtung 30 angeordnet, wobei die Heizeinrichtungen jeweils nur teilweise gezeigt sind. Während des Heizvorgangs erfolgt die Erwärmung des Formkörpers 20 auch in der in Fig. 4 gezeigten Ausführungsform mittels Konvektion unter Verwendung einer der zweiten Seitenfläche 24 des Formkörpers 20 benachbarten Oberfläche 52 eines beweglichen Stempels 50, der Teil der zweiten Heizeinrichtung 30 ist. Im Unterschied zu der in Fig. 3 gezeigten Ausführungsform wird die Oberfläche 52 des Stempels 50 in der in Fig. 4 gezeigten Ausführung nicht durch Heizdrähte oder Heizschleifen erwärmt, sondern mittels Wärmestrahlung. Der Stempel 50 umfasst dazu eine Stempelschale 58, deren erste Seitenfläche die Oberfläche 52 des Stempels bildet und deren der Oberfläche 52 entgegengesetzte zweite Seitenfläche 60 mittels Wärmestrahlung erwärmt wird. Zu diesem Zweck kann die zweite Heizeinrichtung 30 Infrarot-Heizelemente 62 umfassen, die der zweiten Seitenfläche 60 des Stempels 50 gegenüberliegend angeordnet sind. Zur besseren Übersichtlichkeit ist nur ein Infrarot-Heizelement bezeichnet.

Wie in Fig. 4 gezeigt, kann sich die Formgestaltung der zweiten Seitenfläche 60 der Stempelschale 58 an der Kontur der Oberfläche 52 des Stempels 50 orientieren, die ihrerseits abhängig von der Kontur der zweiten Seitenfläche 24 des Formkörpers ausgelegt sein kann. In der in Fig. 4 gezeigten erfindungsgemäßen Ausführungsform ist die zweite Seitenfläche 60 der Stempelschale 58 der Oberfläche 52 des Stempels 50 vereinfachend nachgezeichnet. Jedoch besteht auch bei dieser Formgebung, wie schon bei der Formgebung der ersten Seitenfläche 22 des Formkörpers 20, eine große Gestaltungsfreiheit, so dass sich die konkrete Ausgestaltung im Einzelfall an der Form der herzustellenden Kunststoffhäute, den angestrebten Prozess-Parametern und den eingesetzten Bauteilen und Materialien orientieren wird.

Bei den Infrarot-Heizelementen 62 kann es sich wiederum um konventionelle Infrarot-Heizstrahler mit einer Wendeltemperatur von ca 2000°C handeln, die einzeln oder zu Gruppen zusammengeschaltet angesteuert werden können. Bei der Stempelschale 58 kann es sich beispielsweise um eine dünne Aluminium- oder Kupferschale handeln. Da im Gegensatz zu der in Fig. 3 gezeigten Ausführungsform in der Stempelschale 58 kein Raum für Heizschlangen oder Heizstäbe vorgesehen werden muss, kann die Stempelschale 58 flach und damit gewichtsparend ausgestaltet sein. Selbst unter Berücksichtigung der Infrarot-Heizelemente 62 ergibt sich gegenüber dem in Fig. 3 gezeigten Stempel 50 eine merkliche Reduzierung des Gesamtgewichts, die sich vorteilhaft auf die Verfahrenseffizienz auswirkt.

Zudem lässt sich im Vergleich zu der in Fig. 3 gezeigten Ausführungsform die Wärmeenergie unter Verwendung der einzeln ansteuerbaren, an die Kontur der Stempelschale 58 bzw. des Formkörpers 20 angepassten Infrarot-Heizelemente 62 sowohl räumlich als auch zeitlich zielgenauer zuführen. Wie oben bereits im Zusammenhang mit dem Vorheizprozess ausgeführt, kann dazu die zweite Seitenfläche 60 der Stempelschale 58 zur zusätzlichen Steuerung der Strahlungsabsorption farblich beschichtet sein. Dabei kann es sich sowohl um eine gleichmäßig schwarze Einfärbung als auch um eine lokal differenzierte Einfärbung in Schwarz- und Grautönen handeln.

Neben der Gewichtsersparnis und der räumlich und zeitlich genauer steuerbaren Wärmezufuhr weist die in Fig. 4 gezeigte Ausführungsform den Vorteil auf, dass die Wärmeenergie für den Heizprozess unter Verwendung von Infrarot-Heizelementen besonders schnell zur Verfügung gestellt und auch wieder abgestellt werden kann. Ein Vorwärmen des Stempels wird dadurch entbehrlich, so dass sich die Verfahrensdauer senken und gleichzeitig die Energieeffizienz weiter steigern lässt. Insgesamt führt die mit Bezug auf Fig. 4 beschriebene Ausführungsform zu einem besonders prozesseffizienten Herstellungsverfahren bei gleichbleibend hoher Qualität der erzeugten Kunststoffhäute.

Indem die Infrarot-Heizelemente 62 einzeln steuerbar und ausrichtbar sind und keinen integralen Bestandteil der Stempelschale 58 bilden, lässt sich die beschriebene zweite Heizvorrichtung 30 auch verhältnismäßig einfach an neue Formen anpassen. Dazu müssen ggf. lediglich die Stempelschale 58 ersetzt und/oder die Infrarot-Heizelemente 62 neu ausgerichtet und angesteuert werden.

Bei den bislang mit Bezug auf Fig. 3 und Fig. 4 beschriebenen erfindungsgemäßen Verfahren kommt zum Vorheizen des Formkörpers 20 allein die erste Heizeinrichtung 26 zum Einsatz, zum nachfolgenden Heizen des Formkörpers 20 allein die zweite Heizeinrichtung 30. Wie bereits eingangs geschildert, weist die beschriebene Ausführungsform, bei der die dritte Station mit der ersten Station zusammenfällt, den zusätzlich Vorteil auf, dass sowohl zum Vorheizen als auch zum Heizen die erste Heizeinrichtung 26 und die zweite Heizeinrichtung 30 bei Bedarf auch gemeinsam eingesetzt werden können. Beispielsweise kann zur Beschleunigung des Vorheizens der Formkörper 20 auch beidseitig durch die seiner ersten Seitenfläche 22 gegenüberliegende erste Heizeinrichtung 26 und zusätzlich durch die seiner zweiten Seitenfläche 24 gegenüberliegende zweite Heizeinrichtung 30 erfolgen. Dazu können beide beschriebenen Ausführungsformen der zweiten Heizeinrichtung 30 verwendet werden. Ebenso kann der Formkörper 20 während des oben beschriebenen Heizens zusätzlich zur zweiten Heizeinrichtung 30 auch durch die erste Heizeinrichtung 26 erwärmt werden.

Beim Zusammenwirken beider Heizeinrichtungen ergibt sich neben der Prozessbeschleunigung der zusätzliche Vorteil, dass der Wärmeeintrag von der einen Seite des Formkörpers 20 auf den Wärmeeintrag von der anderen Seite des Formkörpers 20 abgestimmt werden kann. Damit können beispielsweise auch komplex ausgestaltete Formkörper 20 mit zahlreichen Vorsprüngen und Hinterschnitten gezielt vorgewärmt bzw. erwärmt werden. In der in Fig. 4 gezeigten Ausführungsform sind beispielsweise zwei Infrarot-Heizelemente 38 bzw. 38' der ersten Heizeinrichtung 26 und ein Infrarot-Heizelement 62 der zweiten Heizeinrichtung 30 so zueinander angeordnet, dass ein durch eine Kante in der ersten Seitenfläche 22 des Formkörpers 20 zu befürchtender Schattenwurf korrigiert wird und trotz der zerklüfteten Form eine gleichmäßige Erwärmung des Formkörpers 20 erfolgen kann. Die Abstrahlrichtungen der Infrarot-Heizelemente 38 und 38' bzw. 62 sind zur besseren Veranschaulichung in Fig. 4 durch Pfeile gekennzeichnet. Durch die beschriebene abgestimmte Ausrichtung der Infrarot-Heizelemente der ersten bzw. zweiten Heizeinrichtung kann auf eine übermäßig komplexe Formgebung der ersten Seitenfläche 22 oder der Stempelschale 58 verzichtet werden. In dem beschriebenen Beispiel tritt eine Kompensation des Schattenwurfs sogar dann ein, wenn die Stempelschale 58 überhaupt nicht an die Kontur des Formkörpers 20 angepasst ist und lediglich eine ebene erste Seitenfläche 52 und ebene zweite Seitenfläche 60 aufweist.

Fallen, wie in der gezeigten Ausführungsform, die erste und die dritte Station räumlich zusammen, ergibt sich darüber hinaus der Vorteil, dass die Stempelschale 58 der zweiten Heizeinrichtung 30 vor Beginn des Heizens, d.h. vor Einführung des Formkörpers 20, durch die erste Heizeinrichtung 26 erwärmt werden kann, indem ihre erste Seitenfläche 52 in räumliche Nähe zur ersten Heizeinrichtung gebracht wird.

Wie in Fig. 3 illustriert, wird der Formkörper 20 nach Abschluss des Heizprozesses mit der ausgeformten Kunststoffhaut entlang des Verfahrweges 64 zur Kühleinrichtung 32 transportiert. Die Kühleinrichtung 32 weist zur Aufnahme des Formkörpers 20 bzw. 20" eine Öffnung auf, in die der Formkörper 20 so eingefügt werden kann, dass seine erste Seitenfläche 22 einer Anordnung von Kühldüsen 66 gegenüberliegt. Zur Abdichtung des Formkörpers 20 innerhalb der Kühleinrichtung 32 können dabei an den Seitenrändern der Öffnung Dichtungselemente 68 zum Einsatz kommen.

Zum Kühlen des Formkörpers 20 in der Kühleinrichtung 32 kann die erste Seitenfläche 22 des Formkörpers 20 aus den Kühldüsen 66 mit einem Wasser-Luft-Gemisch besprüht werden. Es sind dabei sowohl getrennte Düsen für Wasser bzw. Luft als auch Düsen für ein kombiniertes Wasser-Luft-Gemisch einsetzbar. Die Kühldüsen 66 können in ihrer Ausgestaltung bzw. räumlichen Anordnung an die Kontur des Formkörpers 20 angepasst sein. Dadurch wird eine besonders schnelle und gleichmäßige Kühlung des Formkörpers erreicht. Mit der beschriebenen Sprühnebelkühlung lässt sich die in dem Formkörper 20 ausgeformte Kunststoffhaut innerhalb weniger Sekunden auf eine Temperatur abkühlen, die ihre Entnahme per Hand aus dem Formkörper 20 gestattet.

Das Verfahren kann im Anschluss zur Herstellung einer weiteren Kunststoffhaut mit dem erneuten Vorheizen des Formkörpers 20 an der ersten Heizeinrichtung 26 fortgesetzt werden.

Die beschriebenen erfindungsgemäßen Ausführungsformen und die Figuren dienen nur zur rein beispielhaften Illustration. Die Erfindung kann in ihrer Gestalt variieren, ohne dass sich das zugrundeliegende Funktionsprinzip ändert. Der Schutzumfang des erfindungsgemäßen Verfahrens und der erfindungsgemäßen Vorrichtung ergibt sich allein aus den folgenden Ansprüchen.

## Patentansprüche

1. Verfahren zur Herstellung einer Kunststoffhaut in einem Formkörper (20) mit folgenden Schritten:
Vorheizen des Formkörpers (20) mittels einer einer ersten Seitenfläche (22) des Formkörpers (20) zugewandten ersten Heizeinrichtung (26) an einer ersten Station;
Verteilen eines Pulversubstrats (28) auf einer der ersten Seitenfläche (22) des vorgeheizten Formkörpers (20) entgegengesetzten zweiten Seitenfläche (24) des Formkörpers (20) an einer zweiten Station;
Heizen des mit dem Pulversubstrat beschichteten Formkörpers (20) mittels Konvektion unter Verwendung einer der zweiten Seitenfläche (24) des Formkörpers (20) zugewandten zweiten Heizeinrichtung (30) an einer dritten Station; und
Kühlen des Formkörpers (20) an einer vierten Station;
wobei das Heizen des Formkörpers (20) mittels einer der zweiten Seitenfläche (24) des Formkörpers (20) benachbarten erwärmten Fläche erfolgt.

2. Verfahren nach Anspruch 1, wobei das Heizen des Formkörpers (20) mittels eines erwärmten Stempels (50) erfolgt.

3. Verfahren nach Anspruch 2, wobei die Kontur des Stempels (50) abhängig von der Kontur des Formkörpers (20) ausgelegt wird.

4. Verfahren nach Anspruch 2 oder 3, wobei der Stempel (50) elektrisch mittels eingelassener Heizdrähte oder Heizschleifen erwärmt wird.

5. Verfahren nach Anspruch 2 oder 3, wobei der Stempel (50) erwärmt wird, indem seine der zweiten Seitenfläche (24) des Formkörpers (20) abgewandte Seitenfläche (60) zumindest teilweise mittels Wärmestrahlung, insbesondere durch Infrarot-Heizelemente (62), erwärmt wird.

6. Verfahren nach Anspruch 5, wobei die Infrarot-Heizelemente (62) und/oder ihre Anordnung abhängig von der Kontur des Stempels (50) und/oder Formkörpers (20) ausgelegt werden.

7. Verfahren nach Anspruch 5 oder 6, wobei die Infrarot-Heizelemente (62) einzeln oder in Gruppen gesteuert oder geregelt werden.

8. Vorrichtung zur Herstellung einer Kunststoffhaut in einem Formkörper mit:
einem Formkörper (20), der eine erste Seitenfläche (22) und eine der ersten Seitenfläche (22) entgegengesetzte zweite Seitenfläche (24) umfasst, wobei zumindest die zweite Seitenfläche (24) an die Kontur und/oder Oberflächenstruktur der herzustellenden Kunststoffhaut angepaßt ist;
einer ersten Heizeinrichtung (26) zum Vorheizen des Formkörpers, die an einer ersten Station der ersten Seitenfläche (22) des Formkörpers (20) gegenüberliegt;
einer Beschichtungseinrichtung (36) zum Auftragen und Verteilen eines Pulversubstrats (28) auf der zweiten Seitenfläche (24) des Formkörpers (20) an einer zweiten Station;
einer zweiten Heizeinrichtung (30) zum Heizen des Formkörpers (20) mittels Konvektion, wobei die zweite Heizeinrichtung (30) an einer dritten Station der zweiten Seitenfläche (24) des Formkörpers (20) gegenüberliegt und eine erwärmbare Fläche umfaßt, die der zweiten Seitenfläche (24) des Formkörpers (20) benachbart ist oder in unmittelbare Nachbarschaft zur zweiten Seitenfläche (24) des Formkörpers (20) verfahrbar ist; und
einer Kühleinrichtung (32) zum Kühlen des Formkörpers (20) an einer vierten Station.

9. Vorrichtung nach Anspruch 8, wobei die erwärmbare Fläche eine der zweiten Seitenfläche (24) des Formkörpers (20) gegenüberliegende Oberfläche (52) eines Stempels (50) ist.

10. Vorrichtung nach Anspruch 9, wobei der Stempel (50) beweglich ist.

11. Vorrichtung nach Anspruch 9 oder 10, wobei die Oberfläche (52) des Stempels (50) an die Kontur des Formkörpers (20) angepasst ist.

12. Vorrichtung nach einem der Ansprüche 9 bis 11, wobei der Stempel (50) eingelassene Heizdrähte oder Heizschleifen umfasst.

13. Vorrichtung nach einem der Ansprüche 9 bis 11, wobei die zweite Heizeinrichtung (30) Infrarot-Heizelemente (62) umfasst, die einer der zweiten Seitenfläche (24) des Formkörpers (20) abgewandten Seitenfläche (60) des Stempels (50) gegenüberliegen.

14. Vorrichtung nach Anspruch 13, wobei die Infrarot-Heizelemente (62) einzeln oder in Gruppen ansteuerbar oder regelbar sind.

15. Vorrichtung nach Anspruch 13 oder 14, wobei der Stempel eine Stempelschale (58), insbesondere eine Aluminium- oder Kupferschale, umfasst, deren erste Seitenfläche die Oberfläche (52) des Stempels (50) bildet und deren der ersten Seitenfläche entgegengesetzte zweite Seitenfläche (60) den Infrarot-Heizelementen (62) zugewandt ist.

## Claims

1. A method for producing a plastic skin in a mold (20), comprising the following steps:
preheating, at a first station, the mold (20) by means of a heating device (26) facing a first side face (22) of the mold (20);
distributing, at a second station, a powder substrate (28) on a second side face (24) of the mold (20) opposite to the first side face (22) of the preheated mold (20);
heating, at a third station, the mold substrate (20) coated with the powder substrate by means of convection using a second heating device (30) facing the second side face (24) of the mold (20); and
cooling the mold (20) at a fourth station;
wherein heating of the mold (20) is performed by means of a heated face adjacent to the second side face (24) of the mold (20).

2. The method according to claim 1, wherein heating of the mold (20) is performed by means of a heated punch (50).

3. The method according to claim 2, wherein the contour of the punch (50) is designed as a function of the contour of the mold (20).

4. The method according to claim 2 or 3, wherein the punch (50) is heated electrically by means of embedded heating wires or heating loops.

5. The method according to claim 2 or 3, wherein the punch (50) is heated by heating its side face (60) facing away from the second side face (24) of the mold (20) at least partially by means of thermal radiation, in particular by infrared heating elements (62).

6. The method according to claim 5, wherein the infrared heating elements (62) and/or their arrangement are designed as a function of the contour of the punch (50) and/or of the mold (20).

7. The method according to claim 5 or 6, wherein the infrared heating elements (62) are controlled individually or in groups.

8. An apparatus for producing a plastic skin in a mold (20), comprising:
a mold (20) having a first side face (22) and a second side face (24) opposite to the first side face (22), wherein at least the second side face (24) is adapted to the contour and/or the surface structure of the plastic skin to be produced;
a first heating device (26) for preheating the mold, which is opposed to the first side face (22) of the mold (20) at a first station;
a coating device (36) for applying and distributing a powder substrate (28) on the second side face (24) of the mold (20) at a second station;
a second heating device (30) for heating the mold substrate (20) by means of convection, wherein the second heating device (30) is opposed to the second side face (24) of the mold (20) at a third station and has a heatable face adjacent to the second side face (24) of the mold (20) or displaceable in the direct vicinity of the second side face (24) of the mold (20); and
a cooling device (32) for cooling the mold (20) at a fourth station.

9. The apparatus according to claim 8, wherein the heatable face is a surface (52) of a punch (50) opposed to the second side face (24) of the mold (20).

10. The apparatus according to claim 9, wherein the punch (50) is movable.

11. The apparatus according to claim 9 or 10, wherein the surface (52) of the punch (50) is adapted to the contour of the mold (20).

12. The apparatus according to one of claims 9 to 11, wherein the punch (50) has embedded heating wires or heating loops.

13. The apparatus according to one of claims 9 to 11, wherein the second heating device (30) has infrared heating elements (62) opposed to a side face (60) of the punch (50) facing away from the second side face (24) of the mold (20).

14. The apparatus according to claim 13, wherein the infrared heating elements (62) are controllable individually or in groups.

15. The apparatus according to claim 13 or 14, wherein the punch has a punch cup (58), in particular an aluminum or copper cup, the first side face of which forms the surface (52) of the punch (50) and the second side face (60) of which, which is opposite to the first side face, faces the infrared heating elements (62).

## Revendications

1. Procédé pour la réalisation d'une peau en matière plastique dans un corps de moulage (20), comportant les étapes suivantes :
- préchauffage du corps de moulage (20) au moyen d'un premier dispositif de chauffage (26), orienté vers une première face latérale (22) du corps de moulage (20), dans un premier poste ;
- répartition d'un substrat en poudre (28) sur la deuxième face latérale (24) du corps de moulage (20), opposée à la première face latérale (22) du corps de moulage (20) préchauffé, dans un deuxième poste ;
- chauffage par convection du corps de moulage (20), revêtu du substrat en poudre, moyennant l'utilisation d'un deuxième dispositif de chauffage (30), orienté vers la deuxième face latérale (24) du corps de moulage (20), dans un troisième poste ; et
- refroidissement du corps de moulage (20) dans un quatrième poste ;
dans lequel procédé le corps de moulage (20) est chauffé par l'intermédiaire d'une surface chauffée, adjacente à la deuxième face latérale (24) du corps de moulage (20).

2. Procédé selon la revendication 1, dans lequel le corps de moulage (20) est chauffé au moyen d'une matrice (50) chauffée.

3. Procédé selon la revendication 2, dans lequel le contour de la matrice (50) est configuré en fonction du contour du corps de moulage (20).

4. Procédé selon la revendication 2 ou 3, dans lequel la matrice (50) est chauffée par voie électrique au moyen de filaments de chauffage ou de boucles de chauffages encastrés.

5. Procédé selon la revendication 2 ou 3, dans lequel la matrice (50) est chauffée du fait que sa face latérale (60), détournée de la deuxième face latérale (24) du corps de moulage (20), est chauffée au moins en partie par rayonnement thermique, en particulier par des éléments de chauffage à infrarouge (62).

6. Procédé selon la revendication 5, dans lequel les éléments de chauffage à infrarouge (62) et/ou leur agencement sont configurés en fonction du contour de la matrice (50) et/ou du corps de moulage (20).

7. Procédé selon la revendication 5 ou 6, dans lequel les éléments de chauffage à infrarouge (62) sont commandés ou réglés individuellement ou par groupes.

8. Dispositif destiné à la réalisation d'une peau en matière plastique dans un corps de moulage (20), comportant :
- un corps de moulage (20) comprenant une première face latérale (22) et une deuxième face latérale (24), opposée à la première face latérale (22), au moins la deuxième face latérale (24) étant ajustée au contour et/ou à la structure superficielle de la peau en matière plastique à réaliser ;
- un premier dispositif de chauffage (26) pour le préchauffage du corps de moulage, lequel est disposé dans une premier poste, en regard de la première face latérale (22) du corps de moulage (20) ;
- un dispositif de revêtement (36) pour appliquer et répartir un substrat en poudre (28) sur la deuxième face latérale (24) du corps de moulage (20), dans un deuxième poste ;
- un deuxième dispositif de chauffage (30) pour le chauffage par convection du corps de moulage (20), le deuxième dispositif de chauffage (30), monté dans un troisième poste, étant situé en regard de la deuxième face latérale (24) du corps de moulage (20) et comprenant une surface apte à être chauffée, qui est adjacente à la deuxième face latérale (24) du corps de moulage (20) ou qui peut être déplacée dans le voisinage immédiat de la deuxième face latérale (24) du corps de moulage (20) ; et
- un dispositif de refroidissement (32) pour le refroidissement du corps de moulage (20) dans un quatrième poste.

9. Dispositif selon la revendication 8, dans lequel la surface apte à être chauffée est une surface (52) d'une matrice (50), située en regard de la deuxième face latérale (24) du corps de moulage (20).

10. Dispositif selon la revendication 9, dans lequel la matrice (50) est mobile.

11. Dispositif selon la revendication 9 ou 10, dans lequel la surface (52) de la matrice (50) est ajustée au contour du corps de moulage (20).

12. Dispositif selon l'une quelconque des revendications 9 à 11, dans lequel la matrice (50) comporte des filaments de chauffage ou des boucles de chauffage encastrés.

13. Dispositif selon l'une quelconque des revendications 9 à 11, dans lequel le deuxième dispositif de chauffage (30) comporte des éléments de chauffage à infrarouge (62), qui sont situés en regard d'une face latérale (60) de la matrice (50), détournée de la deuxième face latérale (24) du corps de moulage (20).

14. Dispositif selon la revendication 13, **caractérisé en ce que** les éléments de chauffage à infrarouge (62) peuvent être commandés ou réglés individuellement ou par groupes.

15. Dispositif selon la revendication 13 ou 14, dans lequel la matrice comprend une coque (58), en particulier une coque en aluminium ou en cuivre, dont la première face latérale forme la surface (52) de la matrice (50) et dont la deuxième face latérale (60), opposée à la première face latérale, est orientée vers les éléments de chauffage à infrarouge (62).
